# EUROPEAN PATENT SPECIFICATION

(11) **EP 2 787 756 B1**
(45) Date of publication and mention of the grant of the patent: **05.07.2017**
(21) Application number: 14155305.7
(22) Date of filing: 16.02.2014
(51) Int. Cl.: H04W 16/18

(54) **DEPLOYING A NETWORK OF NODES**
EINSATZ EINES NETZWERKS VON KNOTEN
DÉPLOIEMENT D'UN RÉSEAU DE NOEUDS

(30) Priority: 28.02.2013 US 201313780850
(43) Date of publication of application: 08.10.2014
(73) Proprietor: Honeywell International Inc., Morris Plains, NJ 07950 (US)
(72) Inventor: Pulleti, Uday K., Morristown, NJ 07962-2245 (US); Mahasenan, Arun Vijayakumari, Morristown, NJ 07962-2245 (US)
(74) Representative: Houghton, Mark Phillip

(56) References cited:
- WO-A1-2010/045971
- ANTONY GUINARD ET AL: "Design and deployment tool for in-building wireless sensor networks: A performance discussion", LOCAL COMPUTER NETWORKS (LCN), 2011 IEEE 36TH CONFERENCE ON, IEEE, 4 October 2011 (2011-10-04), pages 649-656, XP032081762, DOI: 10.1109/LCN.2011.6115530 ISBN: 978-1-61284-926-3
- Martin Klepal ET AL: "PREDICTION OF WIDE-BAND PARAMETERS OF MOBILE PROPAGATION CHANNEL", , 17 August 2002 (2002-08-17), XP55174680, Retrieved from the Internet: URL:http://www.ursi.org/Proceedings/ProcGA 02/papers/p0459.pdf [retrieved on 2015-03-09]

## Description

### Technical Field

The present disclosure relates to deploying a network of nodes.

### Background

Nodes can be placed at various locations in a structure to form a network, which can distribute data and/or collect data. For example, a node can include a wireless router. During installation of nodes, a site survey engineer can visit a site and try to meet a requirement for the network through use of prior experience to guess a possible location for each node in the network. Upon installation, the site survey engineer can take measurements associated with the network of nodes to determine whether the requirement for the network has been met. If the requirement for the network has not been met, the site survey engineer can move the nodes in a trial and error method until the requirement for the network has been met. Document ANTONY GUINARD ET AL: "Design and deployment tool for in-building wireless sensor networks: A performance discussion",LOCAL COMPUTER NETWORKS (LCN), 2011 IEEE 36TH CONFERENCE ON, IEEE, 4 October 2011 (2011-10-04), pages 649-656, DOI: 10.1109/LCN.2011.61155301SBN: 978-1-61284-926-3, discloses the design and the deployment of a wireless sensor network exploiting a placement optimization of the nodes based on the use of an agent model which is a representative of a wireless device trying to find its best position within the environment by maximizing its personal utility function.

### Summary of the Invention

The present invention provides a method as defined in claim 1. The method may include the features of any one or more of dependent claims 2 to 10. Any occurrence of the term "embodiment" in the description has to be considered as an "aspect of the invention", the invention being defined only in the appended independent claims.

### Brief Description of the Drawings

Figure 1 illustrates a flow chart for deploying a network of nodes according to one or more embodiments of the present disclosure.
Figure 2 illustrates a method for deploying a network of nodes according to one or more embodiments of the present disclosure.
Figure 3 illustrates a computing device for deploying a network of nodes according to one or more embodiments of the present disclosure.

### Detailed Description

A network of nodes can be installed by a site engineer. As used herein, a network of nodes can include one or more nodes. The site survey engineer can visit a site environment and use prior experience to guess possible locations where each node in the network of nodes should be installed. Upon installation of the network of nodes, the site survey engineer
can determine whether the network of nodes have been placed in the correct locations to meet a requirement for the network.

For example, the site survey engineer can measure network parameters (e.g., signal strength) associated with the network of nodes and if the network parameters do not match the requirement for the network, the site survey engineer can adjust the location of the network of nodes. After making an adjustment to the network of nodes, the site survey engineer can measure the network parameters again to determine whether the network requirements have been met.

However, using such a trial and error method can result in increased time and costs. For example, the site survey engineer may need to be trained and/or possess prior experience to guess the possible locations where each node in the network of nodes should be installed. Alternatively, and/or in addition, the trial and error process involved with installing the network of nodes, measuring network parameters to see if the requirement for the network is met, and then adjusting the placement of the network of nodes if the requirement is not met can be time consuming. For instance, the placement of the network may need to be adjusted multiple times if the measured =network parameters indicate that the network requirements have not been met.

Alternatively, and/or in addition, the trial and error method can result in an over estimating and/or under estimating of the number of nodes. For example, when the number of nodes is over estimated, additional nodes above the number of nodes required to meet requisite network requirements are installed. As such, excess costs can be associated with the cost of each additional node and the cost of installing each additional node. In an example where the number of nodes is under estimated, excess costs can be associated with time spent by the site survey engineer trying to adjust a location of the nodes to meet the network requirements. However, because the number of nodes is underestimated, minimum network requirements may not be met because not enough nodes exist to meet the network requirements.

To help address the limitations associated with the trial and error method of installing a network of nodes, systems, methods, and machine-readable and executable instructions are provided for deploying a network of nodes. Deploying can include receiving site environment data. Deploying can include determining a location to place a node, wherein the determination is based on the site environment data. Deploying can include determining a coverage associated with the node based on a propagation model and the site environment data. Deploying can include determining a location to perform a measurement of data associated with the node based on the determined coverage. Deploying can include updating the propagation model associated with the node based on the measurement of data associated with the node. Deploying can include determining a location to place an additional node based on the updated propagation model.

In the following detailed description of the present disclosure, reference is made to the accompanying drawings that form a part hereof, and in which is shown by way of illustration how one or more embodiments of the disclosure may be practiced. These embodiments are described in sufficient detail to enable those of ordinary skill in the art to practice the embodiments of this disclosure, and it is to be understood that other embodiments may be utilized and that process, electrical, and/or structural changes may be made without departing from the scope of the present disclosure.

The figures herein follow a numbering convention in which the first digit or digits correspond to the drawing figure number and the remaining digits identify an element or component in the drawing. As will be appreciated, elements shown in the various embodiments herein can be added, exchanged, and/or eliminated so as to provide a number of additional embodiments of the present disclosure. As used herein, "a" or "a number of" refers to one or more. In addition, as will be appreciated, the proportion and the relative scale of the elements provided in the figures are intended to illustrate the embodiments of the present invention, and should not be taken in a limiting sense.

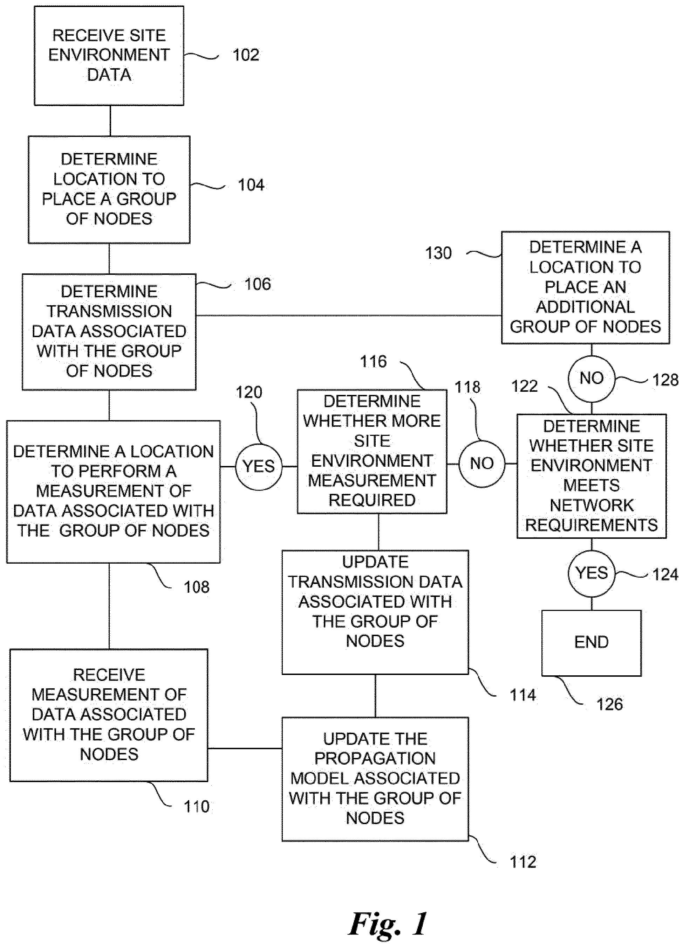

Figure 1 illustrates a flow chart for deploying a network of nodes according to one or more embodiments of the present disclosure. In some embodiments, site environment data can be received 102. In an example, site environment data can include data associated with an environment in which a group of nodes is being installed. For instance, the site environment data can include whether the site environment is an indoor site or an outdoor site. Propagation properties associated with a signal from a node can be affected as a result of whether the environment is an indoor site or an outdoor site. For instance, temperature and/or humidity can vary between indoor and outdoor environments and as a result can affect signal propagation from the network of nodes.

Alternatively, and/or in addition, site environment data can include a geographical location of the site environment. In an example, the geographical location can provide an indication of temperature and humidity, which can affect signal propagation from the network of nodes, as discussed herein. In an example, the geographical location can be associated with a temperature propagation factor and/or a humidity propagation factor, which can be used in determining the effect on the signal propagation from the network of nodes.

In an example, the site environment data can include data associated with free spaces and/or occupied spaces in the site environment. For instance, where the site environment is an indoor site, spaces within the indoor site can be occupied by obstructions, such as, a support column and/or wall, etc. Alternatively, and/or in addition, if the site environment is an outdoor site, spaces within the outdoor site can be occupied by obstructions, such as, equipment (e.g., distillation column), landscaping features (e.g., trees), walls, columns, etc. As such, the signal propagation from the network of nodes can be affected as a result of the absence and/or presence of a free space and/or occupied space.

For example, signal propagation from the network of nodes may be reduced when the signal is obstructed as a result of equipment and/or walls existing in the site environment. Comparatively, signal propagation may not be affected to the same extent in the presence of free spaces in the site environment because the propagation signal will not be obstructed by equipment and/or walls, for example.

In some embodiments, where spaces in the site environment are occupied by an obstruction, such as, a column, wall, landscaping features, equipment, etc., an obstruction propagation factor can be associated with the obstruction. In an example, a reinforced steel and concrete wall may result in a greater obstruction of the signal propagation from the network of nodes than a glass wall. Accordingly, an obstruction propagation factor indicating a greater obstruction associated with the reinforced steel and concrete wall can be assigned to the wall and an obstruction propagation factor indicating a lesser obstruction associated with the glass wall can be assigned to the glass wall.

In an example, the site environment can be displayed on a deployment device. The deployment device can be, for example, a mobile device (e.g., cellular phone, smart phone, personal digital assistant (PDA), handheld computing device, etc.). Alternatively, and/or in addition, the deployment device can be a mobile device, which can be, for example, a personal and/or business computer (e.g., laptop, tablet) among other types of computing devices. The deployment device can display the site environment via a user interface. In an example, the site environment can be an electronic file that is downloaded and displayed by the deployment device. For instance, the site environment can be an electronic file that includes a floor plan of the site environment, which lists columns, walls, landscaping features, equipment, etc.

Alternatively, and/or in addition, the deployment device can be equipped with a camera, line recognition, and/or character recognition and can take a picture of a physical version of the floor plan and convert the physical version of the floor plan into a digital version. In an example, the line recognition and/or character recognition can be used to identify characteristics of the site environment (e.g., columns, walls, landscaping features, equipment, etc.) and details associated with those characteristics.

For instance, line recognition can be used to recognize that an object (e.g., a wall) is present in the site environment and the character recognition can be used to identify details associated with the object. In an example, the details (e.g., wall thickness, wall material) associated with the object can be printed next to the object on the floor plan and character recognition can be used to identify those details. Upon identification of the details associated with the object, the deployment device can assign an obstruction propagation factor to the object based on the details associated with the object.

Alternatively, and/or in addition, a user can create the site environment on the deployment device and/or add objects to the site environment through the deployment device. Accordingly, the deployment device can include functionality for creating (e.g., drawing) the site environment. For instance, if a blueprint does not exist for the site environment, a user can create a drawing on the deployment device map. The user can create a perimeter of the site environment and add objects to the site environment. In an example, the user can add objects to the site environment, such as, columns, walls, landscaping features, equipment, etc. Alternatively, and/or in addition, the user can associate obstruction propagation factors with the objects added to the site environment.

In an example, the site environment data can include physical properties of an object located in the site environment. In an example, the data can include a type of material used to construct the object in the site environment. For instance, the data associated with a column can include a size of the column and that the column is made from concrete and steel; the data associated with a piece of equipment (e.g., distillation column) can include a size of the piece of equipment and that the piece of equipment is made from steel; and/or the data associated with landscaping can include a size and/or number of trees present in the site environment. As discussed herein, different materials can have different obstruction propagation factors associated with them.

In some embodiments, a location to place a group of nodes can be determined 104. In an example, the determination can be based on the site environment data. Alternatively, and/or in addition, the determination can be based on details associated with each node. The deployment device can use the site environment data, which can include perimeter data associated with the site environment, whether the site environment is indoor and/or outdoor, a geographical location of the site environment, and/or data associated with free spaces and/or occupied spaces in the site environment, although examples are not so limited. Based on this information, the deployment device can determine where to place a group of nodes to ensure adequate transmission of data from the group of nodes.

For instance, the deployment device can determine where a node should be placed in relation to a column, wall, landscaping feature, equipment, etc. In an example, the deployment device can determine that nodes should be placed on either side of a wall because the wall can prevent transmission of data as a result of the materials that the wall is made of.

Alternatively, and/or in addition, the deployment device can determine where to place the nodes based on the details associated with each node. In an example, the deployment device can place the group of nodes based on a range of a signal produced by each of the nodes. For instance, the deployment device can determine where to place the group of nodes such that the nodes are within range of each other to enable communication between nodes, and/or the deployment device can place the nodes such that there are no areas in proximity to the group of nodes where data is not broadcast.

In some embodiments, network parameters associated with the group of nodes can be determined 106 based on a propagation model and the site environment data. Alternatively, and/or in addition, the network parameters associated with the group of nodes can be determined 106 based on the details associated with each node. In an example, the propagation model can be a model that describes how data transmitted from the node will be propagated through the site environment. Factors that can affect propagation of the data across the site environment include a perimeter associated with the site environment, whether the site environment is indoor and/or outdoor, a geographical location of the site environment, and/or whether there are free spaces and/or occupied spaces in the site environment, although examples are not so limited.

In an example, the network parameters can include a connectivity associated with the group of nodes. The connectivity can include an ability of a node in the group of nodes to communicate with at least one other node in the group of nodes. The connectivity can be determined through making a determination of signal strength, link quality, time of flight, and/or noise level associated with a signal of the node. In an example, the connectivity can be determined based on the propagation model, the site environment data, and/or the details associated with the nodes. For instance, the site environment data and/or the details associated with the nodes can be entered into the propagation model and the determination of signal strength, link quality, time of flight, and/or noise level associated with the node signal can be made. In an example, the signal strength, link quality, time of flight, and/or noise level associated with the node can be determined within a radius of the node.

In an example, the signal strength, link quality, time of flight, and/or noise level associated with the node can be displayed via the user interface. In an example, the signal strength, link quality, time of flight, and/or noise level can be displayed at a number of points upon the user making a selection to display the values. For instance, the user interface can be a touch screen and at least one of the nodes in the group of nodes can be displayed as well as the site environment. The user can select a point within a radius of the node via the touch screen and the signal strength, link quality, time of flight, and/or noise level can be displayed for the selected point. Alternatively, and/or in addition, the signal strength, link quality, time of flight, and/or noise level can be converted into a single value that can be representative of the connectivity, which can be displayed upon a selection made by the user.

In an example, the network parameters can include a coverage associated with the group of nodes. The coverage can include an ability of a wireless device within the site environment to communicate with at least one of the nodes in the group of nodes. The coverage can be determined through making a determination of signal strength, link quality, time of flight, and/or noise level associated with a signal of the node.

In an example, the coverage can be determined based on the propagation model, the site environment data, and/or the details associated with the nodes. For instance, the site environment data and/or the details associated with the nodes can be entered into the propagation model and the determination of signal strength, link quality, time of flight, and/or noise level associated with the node signal can be made. In an example, the signal strength, link quality, time of flight, and/or noise level associated with the node can be determined within a radius of the node.

In an example, the signal strength, link quality, time of flight, and/or noise level associated with the node can be displayed via the user interface. In an example, the signal strength, link quality, time of flight, and/or noise level can be displayed at a number of points upon the user making a selection to display the values. For instance, the user interface can be a touch screen and the node can be displayed as well as the site environment. The user can select a point within a radius of the node via the touch screen and the signal strength, link quality, time of flight, and/or noise level can be displayed. Alternatively, and/or in addition, the signal strength, link quality, time of flight, and/or noise level can be converted into a single value that can representative of the coverage, which can be displayed upon a selection made by the user.

In some embodiments, a location to perform a measurement of data associated with the group of nodes based on the determined network parameters can be determined 108. In an example, the measurement can be performed by an individual with a sensor that can detect signal strength, link quality, time of flight, and/or noise level of at least one of the nodes in the group of nodes. In some embodiments, the sensor can be built into the deployment device.

In an example, the location to perform the measurement of data can be proximate to an obstruction located in the site environment. For instance, a determination can be made to perform the measurement of data proximate to a column, wall, landscaping feature, equipment, etc. Since the determination of network parameters associated with the group of nodes can be determined based on the propagation model and the site environment data, an amount of error can exist in the determination. For example, a perfect match may not exist between propagation of a signal associated with a particular node and the propagation model. Alternatively, and/or in addition, the site environment data that describes the obstruction may not be a completely accurate indication of how the obstruction may affect the propagation of the signal from the node.

For example, the obstruction propagation factor associated with a steel and concrete wall may not perfectly model how the wall will affect the propagation of the signal from the node. As such, the determined location to perform the measurement of data can be proximate to the obstruction so an accuracy of the propagation model can be checked and/or the propagation model can be updated.

In an example, the measurement of data associated with the group of nodes can be received 110 by the deployment device. As discussed herein, the measurement can be performed by an individual with a sensor that can detect signal strength, link quality, time of flight, and/or noise level of at least one of the nodes in the group of nodes and the measurement can be received by the deployment device along with a location of where the measurement was taken. Alternatively, and/or in addition, in some embodiments, the sensor can be built into the deployment device.

In some embodiments, the propagation model associated with the group of nodes can be updated 112. Alternatively, and/or in addition, the site environment data can be updated. In an example, an amount of error can exist in the propagation model and/or the site environment data. For instance, as discussed herein, the obstruction propagation factor assigned to an obstruction may not be a completely accurate indication of how the obstruction may affect the propagation of the signal from the node. As such, some embodiments can update 112 the propagation model associated with the group of nodes based on the measurement of data associated with the group of nodes.

In an example, the measured data received by the deployment device can be used to check how accurate the propagation model is. For instance, a comparison can be made between the network parameters that have been determined via the propagation model and the network parameters that have been measured. As a result, values, coefficients, and/or terms within the propagation model can be updated to reflect any variations that exist between the network parameters that have been measured and the network parameters that have been determined via the propagation model.

In some embodiments, network parameters associated with the group of nodes can be updated 114. In an example, the updated network parameters can be calculated through using the updated propagation model. For instance, connectivity and/or coverage data can be updated. The updated network parameters can be used to check whether a position of the nodes should be moved. For instance, if the network parameters suggest that the propagation of the signal from at least one of the nodes is not adequate, then the position of at least one of the nodes can be adjusted.

In some embodiments, a determination of whether more site environment measurement is required 116 can be made. In an example, the updated network parameters associated with the group of nodes can be compared to the measured data associated with the group of nodes, which has been received. For instance, if the updated network parameters associated with the group of nodes are within a defined range of the measured data associated with the group of nodes, an indication can be that an accuracy of the updated propagation model is acceptable and a determination that no more site environment measurement is required 118 can be made. Alternatively, and/or in addition, if the updated network parameters associated with the group of nodes are not within a defined range of the measured data associated with the group of nodes, an indication can be made that an accuracy of the updated propagation model is not acceptable and a determination that more site environment measurement is required can be made 120.

When a determination is made that more site environment measurement is required, the location to perform the measurement of data associated with the group of nodes can be determined 108; the measurement of data associated with the group of nodes can be received 110; the propagation model associated with the group of nodes can be updated 112; the network parameters associated with the group of nodes can be updated 114; and the determination whether more site environment measurement is required 116 can be made.

When a determination is made that no more site environment measurement is required 118, a determination of whether the site environment meets network requirements 122 can be made. For example, if coverage and/or connectivity are determined to meet a defined level of coverage and/or connectivity, then a determination that the site environment meets network requirements can be made and the flow chart associated with deploying a network of nodes can end 126.

In some embodiments, if a determination is made that the site environment does not meet network requirements 128, a location to place an additional group of nodes based on the updated propagation model can be determined 130. In an example, the updated values and/or terms within the propagation model that have been updated to reflect any variations that exist between the network parameters that have been measured and the network parameters that have been determined via the propagation model can be used to determine the location to place the additional group of nodes. As a result of using the updated propagation model, the determined location to place the additional group of nodes can be made more accurate because of the updates made to the propagation model.

In some embodiments, the location to place an additional group of nodes can be determined based on areas within the site environment that do not possess a defined coverage and/or connectivity. For example, the deployment device can determine which portions of the site environment have had nodes installed and can further determine the coverage and/or connectivity provided by those nodes. A determination can be made by the deployment device to place an additional group of nodes in an area that does not have a defined coverage and/or connectivity.

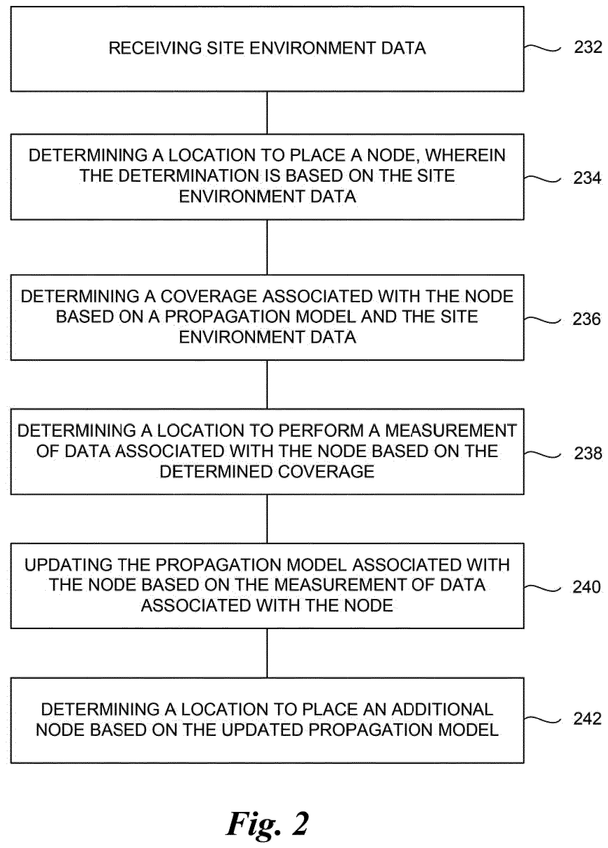

Figure 2 illustrates a method for deploying a network of nodes according to one or more embodiments of the present disclosure. The method can include receiving 232 site environment data, as discussed herein. In some embodiments, a location to place a node can be determined 234 based on the site environment data. In an example, the site environment data can include data associated with an environment in which a group of nodes is being installed.

For instance, the site environment data can include whether the site environment is an indoor or outdoor site environment. Propagation of a signal produced by the node can be affected based on whether the site environment is an indoor environment or an outdoor environment. In an example, the site environment data can include a geographical location of the site environment. For instance, the geographical location of the site environment can have an effect on the propagation of the signal produced by the node. Varying geographical locations can have varying effects on the propagation of the signal. In an example, a temperature and/or humidity, which can vary with differing geographical locations can affect propagation of the signal produced by the node.

In some embodiments, the site environment data can include data associated with free spaces and/or occupied spaces in the site environment. As discussed herein, whether a space contains free spaces and/or occupied spaces can have an effect on propagation of the signal produced by the node.

In some embodiments, the method can include determining 236 a coverage associated with the node based on a propagation model and the site environment. The coverage can include an ability of a wireless device within the site environment to communicate with at least one of the nodes in the group of nodes. The coverage can be determined through making a determination of signal strength, link quality, time of flight, and/or noise level associated with a signal of the node.

In some embodiments, the method can include determining a connectivity associated with the node based on a propagation model and the site environment data. The connectivity can include an ability of a node in the group of nodes to communicate with at least one other node in the group of nodes. The connectivity can be determined through making a determination of signal strength, link quality, time of flight, and/or noise level associated with a signal of the node.

In an example, the method can include determining 238 a location to perform a measurement of data associated with the node based on the determined connectivity. For instance, a determination can be made to perform the measurement of data proximate to an obstruction. Since the determination of the connectivity associated with the group of nodes is determined based on the propagation model and the site environment data, an amount of error can exist in the determination. For example, a perfect match may not exist between propagation of a signal associated with a particular node and the propagation model.

Alternatively, and/or in addition, the site environment data that describes the obstruction may not be a completely accurate indication of how the obstruction may affect the propagation of the signal from the node. As such, the determined location to perform the measurement of data can be proximate to the obstruction so an accuracy of the propagation model can be checked and/or the propagation model can be updated. In an example, the measurement of data associated with the node can include measurement of at least one of a signal strength, link quality, time of flight, and noise level associated with a signal of the node.

In some embodiments, the method can include updating 240 the propagation model associated with the node based on the measurement of data associated with the node. As discussed herein, values, coefficients, and/or terms within the propagation model can be updated to reflect any variations that exist between the network parameters that have been measured and the network parameters that have been determined via the propagation model.

In some embodiments, the method can include determining 242 a location to place an additional node based on the updated propagation model. In an example, as discussed herein, the location to place an additional node can be determined by the deployment device based on areas within the site environment that do not possess a defined coverage and/or connectivity.

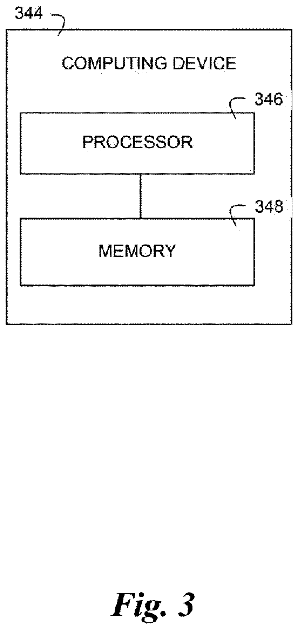

As shown in Figure 3, computing device 344 (e.g., deployment device) includes a processor 346 and a memory 348 coupled to the processor 346. Memory 348 can be any type of storage medium that can be accessed by the processor 346 to perform various examples of the present disclosure. For example, memory 348 can be a non-transitory computer readable medium having computer readable instructions (e.g., computer program instructions) stored thereon that are executable by the processor 346 to deploy a network of nodes according to one or more embodiments of the present disclosure.

Memory 348 can be volatile or nonvolatile memory. Memory 348 can also be removable (e.g., portable) memory, or non-removable (e.g., internal) memory. For example, memory 348 can be random access memory (RAM) (e.g., dynamic random access memory (DRAM) and/or phase change random access memory (PCRAM)), read-only memory (ROM) (e.g., electrically erasable programmable read-only memory (EEPROM) and/or compact-disk read-only memory (CD-ROM)), flash memory, a laser disk, a digital versatile disk (DVD) or other optical disk storage, and/or a magnetic medium such as magnetic cassettes, tapes, or disks, among other types of memory.

Further, although memory 348 is illustrated as being located in computing device 344, embodiments of the present disclosure are not so limited. For example, memory 348 can also be located internal to another computing resource (e.g., enabling computer readable instructions to be downloaded over the Internet or another wired or wireless connection).

Processor 346 can execute the executable instructions stored in memory 348 in accordance with one or more embodiments of the present disclosure. For example, processor 346 can execute the executable instructions stored in memory 348 to receive site environment data. In an example, the site environment data can include physical properties of objects located in the site environment. For instance, the physical properties can include a type of material that the object is made from, a density of the material the object is made from, physical dimensions of the object, and/or coordinates of where the object is located in the site environment, although examples are not so limited.

Alternatively, and/or in addition, the site environment data can include a topology of the site environment. In an example, the topology of the site environment can affect the propagation of the signal produced by the group of nodes. For instance, if the topology includes a hill, the propagation of the signal produced by the group of nodes can be affected as a result of the signal being blocked and/or disturbed by the hill.

Processor 346 can execute the executable instructions stored in memory 348 to determine a location to place a group of nodes. In an example, the determination can be based on the site environment data. Based on this information, the deployment device can determine where to place a group of nodes to ensure adequate transmission of data from the group of nodes.

Processor 346 can execute the executable instructions stored in memory 348 to determine a location to determine a connectivity associated with the group of nodes based on a propagation model and the site environment data, wherein the connectivity includes an ability of a node in the group of nodes to communicate with at least one other node in the group of nodes. Processor 346 can execute the executable instructions stored in memory 348 to determine a location to perform a measurement of data associated with the group of nodes based on the determined connectivity.

In an example, a group of locations to perform the measurement of data associated with the node based on the determined connectivity can be determined. In an example, the group of locations can form a path from the node. For instance, the group of locations can form a path that radially extends from the node. Alternatively, and/or in addition, the group of locations can form a path that radially surrounds the node. As such, a user taking measurements can walk along a single path when obtaining the measurements.

Processor 346 can execute the executable instructions stored in memory 348 to update the propagation model associated with the group of nodes based on the measurement of data associated with the group of nodes. In an example, the propagation model may not provide a completely accurate indication of how an obstruction may affect the propagation of the signal from the node. As such, the measurement of data associated with the group of nodes can include actual data associated with the propagation of the signal (e.g., signal strength, link quality, time of flight, and/or noise level) from the group of nodes and can be used to update values, coefficients, and/or terms within the propagation model.

In an example, the connectivity associated with the group of nodes can be updated based on the measurement of data associated with the node and/or the updated propagation model. As discussed herein, the propagation model may not provide a completely accurate indication of how an obstruction may affect the propagation of the signal from the node and/or the connectivity. As such, the connectivity can be updated based on the measurement of data associated with the node and the updated propagation model.

In an example, an adjustment to make to the location of the group of nodes can be determined based on the measurement of data associated with the group of nodes and/or the updated propagation model. As discussed herein, the propagation model may not provide a completely accurate indication of how an obstruction may affect the propagation of the signal from the node. As a result, the node may be placed in a position that does not provide a requisite propagation of the signal. Accordingly, the location of the group of nodes can be adjusted based on the measurement of data associated with the group of nodes and/or the updated propagation model.

Although specific embodiments have been illustrated and described herein, those of ordinary skill in the art will appreciate that any arrangement calculated to achieve the same techniques can be substituted for the specific embodiments shown. This disclosure is intended to cover any and all adaptations or variations of various embodiments of the disclosure.

It is to be understood that the above description has been made in an illustrative fashion, and not a restrictive one. Combination of the above embodiments, and other embodiments not specifically described herein will be apparent to those of skill in the art upon reviewing the above description.

The scope of the various embodiments of the disclosure includes any other applications in which the above structures and methods are used. Therefore, the scope of various embodiments of the disclosure should be determined with reference to the appended claims, along with the full range of equivalents to which such claims are entitled.

## Claims

1. A method for deploying a network of nodes, comprising:
receiving (232), at a computing device, site environment data that includes a number of obstructions within a site environment;
determining (234), via the computing device, a location within the site environment to place a node, wherein the determination is based on the site environment data;
assigning an obstruction propagation factor to each of a number of obstructions within a propagation model of the site environment based on corresponding obstruction features;
determining (236), via the computing device, a coverage associated with the node based on the propagation model and the site environment data, wherein the propagation model includes a selectable radius of the node to display a link value between a selected position and the node, wherein the displayed link value is a value converted from the signal strength, link quality, time of flight, and noise level of predicted communication between the node and a device positioned at the selected position;
determining (238), via the computing device, a location within the site environment to perform a measurement of data associated with the node based on the determined coverage when the obstruction propagation factor for a particular obstruction from the number of obstructions is determined to be incorrect, wherein the location is proximate to the particular obstruction of the number of obstructions;
comparing, via the computing device, the determined coverage with the measurement of data to determine an accuracy of the determined coverage;
determining, at the computing device, to perform an additional measurement of data associated with the node when the determined accuracy is outside a defined range and when the obstruction propagation factor for the particular obstruction from the number of obstructions is determined to be incorrect;
updating (240), via the computing device, the propagation model based on the additional measurement of data associated with the node; and
determining (242), via the computing device, a location within the site environment to place an additional node based on the updated propagation model.

2. The method of claim 1, wherein the site environment data includes whether the site environment is an indoor or outdoor site environment.

3. The method of claim 1, wherein the coverage includes an ability of a wireless device within the site environment to communicate with the node.

4. The method of claim 1, wherein the site environment data includes a geographical location of the site environment.

5. The method of claim 1, wherein the site environment data includes data associated with free spaces and occupied spaces in the site environment.

6. The method of claim 1, wherein the measurement of data associated with the node includes measurement of at least one of a signal strength, link quality, time of flight, and noise level associated with a signal of the node.

7. The method of claim 1, wherein the site environment data includes details associated with materials included in the site environment.

8. The method of claim 1, wherein the method includes:
determining a connectivity associated with the node based on a propagation model and the site environment data; and
determining a location to perform a measurement of data associated with the node based on the determined connectivity.

9. The method of claim 8, wherein the connectivity includes an ability of the node to communicate with an additional node within the site environment.

10. The method of claim 1, wherein the method includes determining the location to place the additional node based on the site environment data that includes a topology of the site environment.

## Patentansprüche

1. Verfahren zum Einsetzen eines Knotennetzes, das Folgendes umfasst:
Empfangen (232) bei einer Rechenvorrichtung von Ortsumgebungsdaten, die eine Anzahl von Hindernissen innerhalb einer Ortsumgebung enthalten;
Bestimmen (234) über die Rechenvorrichtung eines Orts innerhalb der Ortsumgebung, um einen Knoten zu positionieren, wobei die Bestimmung auf den Ortsumgebungsdaten beruht;
Zuweisen eines Hindernisausbreitungsfaktors zu jedem einer Anzahl von Hindernissen innerhalb eines Ausbreitungsmodells der Ortsumgebung anhand von entsprechenden Hinderniseigenschaften;
Bestimmen (236) über die Rechenvorrichtung einer Abdeckung, die dem Knoten zugeordnet ist, anhand des Ausbreitungsmodells und der Ortsumgebungsdaten, wobei das Ausbreitungsmodell einen auswählbaren Radius des Knotens enthält, um einen Verbindungswert zwischen einer ausgewählten Position und dem Knoten anzuzeigen, wobei der angezeigte Verbindungswert ein Wert ist, der aus der Signalstärke, der Verbindungsqualität, der Laufzeit und dem Rauschpegel einer vorhergesagten Kommunikation zwischen dem Knoten und einer Vorrichtung, die an der ausgewählten Position positioniert ist, umgesetzt wird;
Bestimmen (238) über die Rechenvorrichtung anhand der bestimmten Abdeckung eines Orts innerhalb der Ortsumgebung, um eine Messung von Daten auszuführen, die dem Knoten zugeordnet sind, wenn bestimmt wird, dass der Hindernisausbreitungsfaktor für ein bestimmtes Hindernis von der Anzahl von Hindernissen nicht korrekt ist, wobei der Ort in der Nähe des bestimmten Hindernisses der Anzahl von Hindernissen liegt;
Vergleichen über die Rechenvorrichtung der bestimmten Abdeckung mit der Messung von Daten, um eine Genauigkeit der bestimmten Abdeckung zu bestimmen;
Bestimmen bei der Rechenvorrichtung, eine zusätzliche Messung von Daten auszuführen, die dem Knoten zugeordnet sind, wenn die bestimmte Genauigkeit außerhalb eines definierten Bereichs liegt und wenn bestimmt wird, dass der Hindernisausbreitungsfaktor für das bestimmte Hindernis der Anzahl von Hindernissen nicht korrekt ist;
Aktualisieren (240) über die Rechenvorrichtung des Ausbreitungsmodells anhand der zusätzlichen Messung von Daten, die dem Knoten zugeordnet sind; und
Bestimmen (242) über die Rechenvorrichtung eines Orts innerhalb der Ortsumgebung, um einen zusätzlichen Knoten anhand des aktualisierten Ausbreitungsmodells zu positionieren.

2. Verfahren nach Anspruch 1, wobei die Ortsumgebungsdaten enthalten, ob die Ortsumgebung eine Innen- oder Außenortsumgebung ist.

3. Verfahren nach Anspruch 1, wobei die Abdeckung eine Fähigkeit einer drahtlosen Vorrichtung innerhalb der Ortsumgebung, mit dem Knoten zu kommunizieren, enthält.

4. Verfahren nach Anspruch 1, wobei die Ortsumgebungsdaten einen geographischen Ort der Ortsumgebung enthalten.

5. Verfahren nach Anspruch 1, wobei die Ortsumgebungsdaten Daten enthalten, die freien Räumen und besetzten Räumen in der Ortsumgebung zugeordnet sind.

6. Verfahren nach Anspruch 1, wobei die Messung von Daten, die dem Knoten zugeordnet sind, eine Messung einer Signalstärke und/oder einer Verbindungsqualität und/oder einer Laufzeit und/oder eines Rauschpegels, die einem Signal des Knotens zugeordnet sind, enthalten.

7. Verfahren nach Anspruch 1, wobei die Ortsumgebungsdaten Details enthalten, die Materialien zugeordnet sind, die in der Ortsumgebung enthalten sind.

8. Verfahren nach Anspruch 1, wobei das Verfahren Folgendes enthält:
Bestimmen einer Verbindungsfähigkeit, die dem Knoten zugeordnet ist, anhand eines Ausbreitungsmodells und der Ortsumgebungsdaten; und
Bestimmen eines Orts, um eine Messung von Daten auszuführen, die dem Knoten zugeordnet sind, anhand der bestimmten Verbindungsfähigkeit.

9. Verfahren nach Anspruch 8, wobei die Verbindungsfähigkeit eine Fähigkeit des Knotens enthält, mit einem zusätzlichen Knoten innerhalb der Ortsumgebung zu kommunizieren.

10. Verfahren nach Anspruch 1, wobei das Verfahren enthält, anhand der Ortsumgebungsdaten, die eine Topologie der Ortsumgebung enthalten, den Ort zu bestimmen, um den zusätzlichen Knoten zu positionieren.

## Revendications

1. Procédé pour déployer un réseau de noeuds, le procédé comprenant les étapes consistant à :
recevoir (232), au niveau d'un dispositif informatique, des données d'environnement de site comportant un certain nombre d'obstacles dans un environnement de site ;
déterminer (234), par le biais du dispositif informatique, un emplacement dans l'environnement de site où implanter un noeud, la détermination étant fonction des données d'environnement de site ;
assigner un facteur de propagation d'obstacle à chacun d'un certain nombre d'obstacles dans un modèle de propagation de l'environnement de site en fonction de caractéristiques d'obstacle correspondantes ;
déterminer (236), par le biais du dispositif informatique, une couverture associée au noeud en fonction du modèle de propagation et des données d'environnement de site, le modèle de propagation comportant un rayon sélectionnable du noeud où afficher une valeur de liaison entre une position sélectionnée et le noeud, la valeur de liaison affichée étant une valeur convertie à partir de la puissance de signal, de la qualité de liaison, du temps de vol et du niveau de bruit d'une communication prédite entre le noeud et un dispositif occupant la position sélectionnée ;
déterminer (238), par le biais du dispositif informatique, un emplacement dans l'environnement de site où effectuer une mesure de données associée au noeud en fonction de la couverture déterminée lorsqu'il est déterminé que le facteur de propagation d'obstacle pour un obstacle particulier parmi le nombre d'obstacles est inexact, l'emplacement étant proche de l'obstacle particulier parmi le nombre d'obstacles ;
comparer, par le biais du dispositif informatique, la couverture déterminée à la mesure de données afin de déterminer une précision de la couverture déterminée ;
déterminer, au niveau du dispositif informatique, qu'il convient d'effectuer une mesure additionnelle de données associée au noeud lorsque la précision déterminée sort d'une plage définie et lorsqu'il est déterminé que le facteur de propagation d'obstacle pour l'obstacle particulier parmi le nombre d'obstacles est inexact ;
mettre à jour (240), par le biais du dispositif informatique, le modèle de propagation en fonction de la mesure additionnelle de données associée au noeud ; et
déterminer (242), par le biais du dispositif informatique, un emplacement dans l'environnement de site où implanter un noeud additionnel en fonction du modèle de propagation mis à jour.

2. Procédé selon la revendication 1, dans lequel les données d'environnement de site indiquent si l'environnement de site est un environnement de site intérieur ou extérieur.

3. Procédé selon la revendication 1, dans lequel la couverture comporte une aptitude d'un dispositif sans fil dans l'environnement de site à communiquer avec le noeud.

4. Procédé selon la revendication 1, dans lequel les données d'environnement de site comportent un emplacement géographique de l'environnement de site.

5. Procédé selon la revendication 1, dans lequel les données d'environnement de site comportent des données associées à des espaces libres et des espaces occupés dans l'environnement de site.

6. Procédé selon la revendication 1, dans lequel la mesure de données associée au noeud comporte une mesure d'une puissance de signal et/ou d'une qualité de liaison et/ou d'un temps de vol et/ou d'un niveau de bruit associés à un signal du noeud.

7. Procédé selon la revendication 1, dans lequel les données d'environnement de site comportent des renseignements associés à des matériaux contenus dans l'environnement de site.

8. Procédé selon la revendication 1, lequel procédé comporte les étapes consistant à :
déterminer une connectivité associée au noeud en fonction d'un modèle de propagation et des données d'environnement de site ; et
déterminer un emplacement où effectuer une mesure de données associée au noeud en fonction de la connectivité déterminée.

9. Procédé selon la revendication 8, dans lequel la connectivité comporte une aptitude du noeud à communiquer avec un noeud additionnel dans l'environnement de site.

10. Procédé selon la revendication 1, lequel procédé comporte l'étape consistant à déterminer l'emplacement où implanter le noeud additionnel en fonction des données d'environnement de site comportant une topologie de l'environnement de site.
